# EUROPEAN PATENT APPLICATION

(11) **EP 2 320 167 A1**
(43) Date of publication of application: **11.05.2011**
(21) Application number: 09804848.1
(22) Date of filing: 13.07.2009
(51) Int. Cl.: F25B 47/00, C08L 27/12, C08L 79/08, F25B 1/00, C08L 101/00

(54) **RESIN MATERIAL FOR REFRIGERATION CIRCUIT**

(30) Priority: 04.08.2008 JP 2008201038; 09.10.2008 JP 2008263181
(71) Applicant: Sanden Corporation, Isesaki-shi Gunma 372-8502 (JP)
(72) Inventor: KAMISHIMA Hiromitsu, Isesaki-shi Gunma 372-8502 (JP); MATSUZAKI Tomoaki, Isesaki-shi Gunma 372-8502 (JP); MATSUMOTO Takayuki, Isesaki-shi Gunma 372-8502 (JP); KOMATSU Shunji, Isesaki-shi Gunma 372-8502 (JP); HOSOI Hidenori, Isesaki-shi Gunma 372-8502 (JP)
(74) Representative: Prüfer & Partner GbR European Patent Attorneys
(86) International application number: PCT/JP2009/062678
(87) International publication number: WO 2010/016361

(57) **Abstract**

A resin material for a refrigeration circuit comprising a compressor for a refrigerant, a condenser, a depressurizing/expanding means, and an evaporator, the resin material being disposed in the refrigeration circuit at such a position that the resin part comes into direct contact with the refrigerant. The resin material is **characterized in that** when R1234yf is used as the refrigerant, the resin material has chemical resistance at least to the refrigerant itself or ingredients generated by the decomposition of the refrigerant. This resin material is prevented from undergoing a chemical reaction with the refrigerant R1234yf itself or ingredients generated by the decomposition thereof. Consequently, refrigerant leakage caused by the decomposition of the resin material is prevented. Furthermore, clogging and a decrease in refrigerating performance, which are caused by the circulation of an undesirable compound through the circuit, are prevented. Even in a refrigeration circuit employing R1234yf, the same refrigerating performance and operation stability as in conventional refrigeration circuits can be realized.

## Description

### Technical Field of the Invention

The present invention relates to a resin material for a refrigeration circuit, and specifically relates to a resin material suitable for being provided in a refrigeration circuit using R1234yf as refrigerant.

### Background Art of the Invention

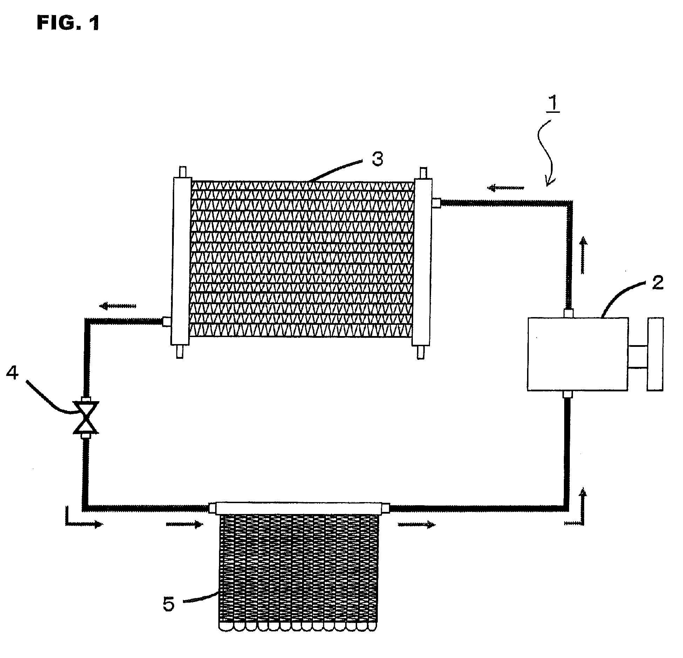

A refrigeration cycle used in an automotive air conditioning system, etc., is basically configured as shown in Fig. 1. In Fig. 1, a refrigeration circuit 1 has a compressor 2 compressing refrigerant, a condenser 3 condensing compressed refrigerant, an expansion valve 4 as a decompression/expansion means decompressing and expanding condensed refrigerant and an evaporator 5 evaporating decompressed and expanded refrigerant, and the refrigerant is circulated through refrigeration circuit 1 as the refrigerant changes its state. In such refrigeration circuit 1, R134a is used as a typical refrigerant at present, and nylon is typically used as material for forming a surface of a resin member coming into direct contact with the refrigerant in the refrigeration circuit as disclosed in Patent Document 1 and Patent Document 2.

For the R134a, etc., as a conventional typical refrigerant, research and development for a new refrigerant are being performed as disclosed in Non-patent document 1, aiming at further improvement of the global warming potential (GWP), etc. R1234yf has been recently announced as the new refrigerant aiming such an improvement. And the research and development can be performed even for the application to a refrigeration cycle used in an automotive air conditioning system, etc.

### Prior art documents

### Patent documents

Patent document 1: JP- 6-294485-A
Patent document 2: JP- 6-211985-A

### Non-patent documents

Non-patent document 1: Refrigeration, Vol. 83, No. 965, March issue, 2008

### Summary of the Invention

### Problems to be solved by the Invention

However, since the new refrigerant R1234yf has low chemical stability in comparison with R134a, hydrogen fluoride which is a strong acid might be generated due to the deterioration or denaturalization of the refrigerant. The hydrogen fluoride generally causes hydrolysis of resin materials, and specifically nylon, which is conventionally used as a material for forming an inner surface of a hose having high contact frequency with the refrigerant under high-temperature condition, tends to cause chemical reactions with acids because amide bonds in nylon molecules can react chemically with acids directly. Therefore, in a refrigeration circuit using R1234yf as refrigerant, when nylon is used as a material for forming a surface of a member coming into direct contact with the refrigerant, nylon might be deteriorated by the hydrolysis and troubles, such as refrigerant leakage or deterioration of refrigerating performance, might be caused.

In addition, The hydrogen fluoride might cause chemical reactions even with the refrigerating machine oil. For example, polyalkylene glycols (they may be abbreviated to PAG in the following.), which are generally used in a refrigeration circuit provided with an open type compressor, react chemically with hydrogen fluoride to generate organic acid. Such an acid causes hydrolysis of nylon like the above-described hydrogen fluoride. Therefore, in a refrigeration circuit using R1234yf as refrigerant, it is necessary that a material for forming a surface of a member coming into direct contact with the refrigerant and with the refrigerating machine oil has chemical resistance not only to the refrigerant itself and its ingredients generated by decomposition of the refrigerant, but also to ingredients generated by decomposition or denaturalization of the refrigerating machine oil.

Accordingly, an object of the present invention is to provide a resin material for a refrigeration circuit, wherein the resin material has resistance required in a case where the above-described new refrigerant R1234yf is used and the resin material preferably can exhibit resistance even to refrigerating machine oil.

### Means for solving the Problems

To achieve the above objects, the present invention provides a resin material disposed at a port coming into direct contact with refrigerant in a refrigeration circuit which comprises a compressor for compressing refrigerant, a condenser for condensing compressed refrigerant, a depressurizing/expanding means for depressurizing and expanding condensed refrigerant, and an evaporator for evaporating depressurized and expanded refrigerant, characterized in that when R1234yf is used as said refrigerant for said refrigeration circuit, said resin material has a chemical resistance at least to said refrigerant or ingredients generated by decomposition of said refrigerant.

Because such a resin material for a refrigeration circuit has chemical resistance at least to the refrigerant or to the ingredients which are generated by the decomposition or the denaturalization of the refrigerant (for example, hydrogen fluoride), the resin material for a refrigeration circuit does not cause chemical reactions with the refrigerant or with the ingredients, thus the decomposition of the resin material for a refrigeration circuit is prevented, and the generation of undesirable compounds is also prevented. Therefore, refrigerant leakage due to the decomposition of the resin material is prevented. Furthermore, clogging and a decrease in refrigerating performance, which are caused by the circulation of an undesirable compound through the circuit, are prevented. Even in a refrigeration circuit employing R1234yf, the same refrigerating performance and operation stability as in conventional refrigeration circuits can be realized. It is preferred that the resin material for a refrigeration circuit according to the present invention has chemical resistance to both the refrigerant and the ingredients which are generated by decomposition of the refrigerant though the present invention is not particularly limited to it. It is enough for the resin material to have chemical resistance at least to either refrigerant itself or ingredients which are generated by decomposition of the refrigerant.

Such a resin material for a refrigeration circuit is suitably applicable to a case where refrigerating machine oil is circulated through the refrigeration circuit together with the refrigerant. In particular, it is preferred that the resin material for a refrigeration circuit has heat resistance to a temperature of high-temperature fluid consisting of a mixture of the refrigerant and the refrigerating machine oil. In the refrigeration circuit using R1234yf as a refrigerant, the temperature of the high-temperature fluid, which consists of a mixture of the refrigerant and the refrigerating machine oil, can be raised to around 200 degree Celsius for a moment at a position where is near a sliding friction member in the refrigeration circuit. Therefore, the heat resistance capable of resisting such a high temperature is important to maintain the refrigerating performance and operational stability of the refrigeration circuit through long-term operation.

Further, when refrigerating machine oil is circulated through a refrigeration circuit together with a refrigerant, it is preferred that the resin material for a refrigeration circuit according to the present invention has chemical resistance to ingredients which are generated by decomposition or the denaturalization of the refrigerating machine oil. For example, when polyalkylene glycol (PAG) is used as the refrigerating machine oil, as described above, PAG might be decomposed by hydrogen fluorine which is generated by the denaturalization of the refrigerant R1234yf, and undesirable compounds such as organic acid or olefin might be brought in the refrigeration circuit. Meanwhile, when the resin material for a refrigeration circuit has such a chemical resistance to the ingredients which are generated by the decomposition or the denaturalization of the refrigerating machine oil, even if undesirable compounds derived from the refrigerating machine oil are generated in the refrigeration circuit, it is possible to secure refrigerating performance and operational stability at the same level as conventional refrigeration circuits.

In the present invention, it is preferred that PAG is used as refrigerating machine oil in the refrigeration circuit, although the kind of the refrigerating machine oil is not particularly limited. Since PAG has high hydrolysis resistance and is less likely denaturalized by water, it is possible to maintain stable refrigerating performance even in a refrigerating circuit provided with an open type compressor (a compressor provided with a shaft seal member made of potentially permeable material such as rubber material) wherein it is difficult to eliminate a potential contamination of moisture included in the air.

In the present invention, a constituent of the resin material for a refrigeration circuit is preferably at least one compound selected from the group consisting of fluorinated resin, vinyl chloride resin, aliphatic hydrocarbon resin, aromatic hydrocarbon resin, sulfide resin, imide resin, aromatic polyether, epoxy resin, phenolic resin, aromatic polyamide (for example, a fully aromatic polyamide resin or a semi-aromatic polyamide resin), polyester, polyketone and polyphenyl sulfone, however, the constituent is not particularly limited thereto.

The above-described fluorinated resin can be polytetrafluoroethylene (PTFE), a copolymer of tetrafluoroethylene and perfluoroalkyl vinyl ether (PFA), a copolymer of tetrafluoroethylene and hexafluoropropylene (FEP), a copolymer of tetrafluoroethylene and ethylene (ETFE), polychloro trifluoroethylene (PCTTE), a copolymer of chloro-trifluoro-ethylene and ethylene (ECTFE), polyvinylidene fluoride (PVDF) or polyvinyl fluoride (PVF), though it is not particularly limited thereto. The use of such a fluorinated resin makes it possible to obtain a resin material for a refrigeration circuit with excellent heat resistance, excellent chemical resistance and a small coefficient of friction.

The above-described vinyl chloride resin can be polyvinyl chloride (PVC) or polyvinylidene (PVDC), though it is not particularly limited thereto. The use of such a vinyl chloride resin makes it possible to obtain a water-resistant, chemical-resistant and flame-retardant resin material for a refrigeration circuit.

The above-described aliphatic hydrocarbon resin can be polyethylene, ultra high-molecular weight polyethylene, isotactic polypropylene, syndiotactic polypropylene or poly-4-methylpentene-1, though it is not particularly limited thereto. The use of such an aliphatic hydrocarbon resin makes it possible to obtain a resin material for a refrigeration circuit with excellent chemical resistance and high strength.

The above-described aromatic hydrocarbon resin can be syndiotactic polystyrene or isotactic polystyrene, though it is not particularly limited thereto. The use of such an aromatic hydrocarbon resin makes it possible to obtain a water-resistant, easily processable resin material for a refrigeration circuit.

The above-described sulfide resin can be polyphenylene sulfide (PPS), though it is not particularly limited thereto. The use of such a sulfide resin makes it possible to obtain a resin material for a refrigeration circuit with high strength and excellent heat resistance.

The above-described imide resin can be polyimide, polyamide-imide, polyetherimide or polybenzimidazole (PBI), though it is not particularly limited thereto. The use of such a imide resin makes it possible to obtain a resin material for a refrigeration circuit with high strength, excellent heat resistance and excellent insulation property.

The above-described aromatic polyether can be polyetheretherketone (PEEK), poly aryl ether nitrile, polyphenylene ether (PPE) or modified polyphenylene ether (MPPE), though it is not particularly limited thereto. The use of such an aromatic polyether makes it possible to obtain a heat-resistant, chemical-resistant resin material for a refrigeration circuit.

The above-described aromatic polyamide can be fully aromatic polyamide resin or semi-aromatic polyamide resin (for example, poly-meta-xylylene suberamide or poly-para-xylylene suberamide), though it is not particularly limited thereto. The aromatic polyamide preferably comprises polyphthalamide (PPA), however, it is not particularly limited thereto. The use of such an aromatic polyamide makes it possible to obtain a resin material for a refrigeration circuit with high strength, excellent heat resistance and excellent chemical resistance.

When an aromatic polyamide is used as a resin material for a refrigeration circuit as described above, an amide bond ratio of the aromatic polyamide is preferably less than 0.2 however, the ratio is not particularly limited within the range. Where, when a chemical formula of polyamide is expressed as "-(CO-NH)ₙ-(CHₓ)ₘ-", the amide bond ratio is a value defined by "n/m". By regulating the amide bond ratio to less than 0.2, the ratio of carbons to amide bonds increases and it is possible to obtain more strengthened resin material for refrigeration circuit.

Further, a resin material having high strength, excellent heat resistance and excellent abrasion resistance for a refrigeration circuit can be obtained by using aforementioned polyester as a constituent of the resin material.

It is possible that at least one selected from the group consisting of carbon fiber, glass fiber, talc, calcium carbonate, carbon black and graphite is compounded with the resin material for a refrigeration circuit according to the present invention, although constituents thereof are not particularly limited. A reinforced resin material for a refrigeration circuit can be obtained by compounding resin reinforcing fibers (for example, carbon fibers and glass fibers) or rigid reinforcing fillers (for example, talc, calcium carbonate and carbon black) with the resin material for a refrigeration circuit. Further, when lubricity improvers (for example, graphite, etc.) are compounded with the resin material for a refrigeration circuit, since the frictional force of the resin material is weakened as the lubricating ability of the resin material improves, the resin material can be useful as a material for forming a shaft bearing member or a sliding member.

The resin material for a refrigeration circuit according to the present invention is suitably applicable to a material for forming a member coming into contact with the refrigerant in the refrigeration circuit. The use of such a resin material for a refrigeration circuit can be a surface forming material for a member having a sliding surface provided in the compressor, a material for forming a filter provided in the compressor or a material for forming an inner surface of a hose etc. can be enumerated, though the use of the resin material for a refrigeration circuit according to the present invention is not particularly limited thereto. In other words, the resin material for a refrigeration circuit is suitably applicable to any surface forming material for forming a surface of a member coming into contact with the refrigerant.

The constitution and the composition of the resin material for a refrigeration circuit according to the present invention are not particularly limited as far as the resin material has chemical resistance at least to the refrigerant R1234yf itself or to the ingredients generated by the decomposition of the refrigerant R1234yf. In other words, the resin material for a refrigeration circuit according to the present invention can consist of a single material, a blend of two or more materials, or an alloyed material. Further, the resin material can be composed of two or more materials which are laminated so as to improve heat resistance or workability. Furthermore, a product using the resin material for a refrigeration circuit according to the present invention might be formed as a molded product made of resin, or might be formed as an integrated product made of metal and the resin material.

The resin material for a refrigeration circuit according to the present invention is suitably applicable to an air conditioning system for vehicles. By employing the present invention with a refrigeration circuit in an air conditioning system for vehicles using the new refrigerant R1234yf, it is possible to realize an automobile air conditioning system which can reduce environmental loads due to the intrinsic characteristics of the new refrigerant R1234yf, while refrigerating performance is maintained almost at the same level as conventional refrigeration circuits.

### Effect according to the Invention

As described above, according to the resin material for a refrigeration circuit in accordance with the present invention, because the chemical reaction of the resin material at least with the refrigerant R1234yf itself or with the ingredients generated by the decomposition of the refrigerant R1234yf is inhibited, it is possible to prevent troubles such as refrigerant leakage due to the decomposition of the resin material for a refrigeration circuit, clogging due to the circulation of undesirable compounds through the circuit, deterioration of refrigerating performance and so forth. Further, even in a refrigeration circuit using the refrigerant R1234yf, it is possible to achieve refrigerating performance and operating stability at the same level as conventional refrigeration circuits.

### Brief explanation of the drawings

[Fig. 1] Fig. 1 is a schematic framework showing a basic equipment layout of a refrigeration circuit as an object of the present invention.
[Fig. 2] Fig. 2 is an FT-IR absorption spectrum chart of Comparative Example 1.
[Fig. 3] Fig. 3 is a chart showing a result of EDX analysis of Comparative Example 1.
[Fig. 4] Fig. 4 is an FT-IR absorption spectrum chart of Comparative Example 2.
[Fig. 5] Fig. 5 is a chart showing a result of EDX analysis of Comparative Example 1.
[Fig. 6] Fig. 6 is an FT-IR absorption spectrum chart of Practical Example 1.
[Fig. 7] Fig. 7 is a chart showing a result of EDX analysis of Practical Example 1.
[Fig. 8] Fig. 8 is an FT-IR absorption spectrum chart of Practical Example 2.
[Fig. 9] Fig. 9 is a chart showing a result of EDX analysis of Practical Example 2.

### Embodiments for carrying out the Invention

Hereinafter, the present invention will be explained concretely using Experimental Examples including Practical Examples and Comparative Examples though they do not limit the scope of the present invention.

In the following sentences, chemical resistance of resin material in a refrigeration circuit using new refrigerant R1234yf will be explained as referring to experimental results, under conditions using polytetrafluoroethylene (PTFE) and polyimide as examples of resin material for a refrigeration circuit according to the present invention, and a condition using nylon 6 as conventional resin material for a refrigeration circuit as a comparative example. Operating conditions, analysis conditions and analysis items of the Experimental Examples were set as follows.

### [Experiment Conditions]

Experiment 1: Resin material, polyalkylene glycol (PAG) as refrigerating machine oil and the refrigerant R1234yf were sealed in a heat-resisting glass tube at a vacuum state. After the heat-resisting glass tube was placed in a constant-temperature oven of 120 degrees Celsius for 14 days (336h), the sample which was cooled to room temperature was analyzed. A concrete procedure of sealing is as follows: A strip of resin material which was cut into a size of about 4mm X 25mm and 2ml of refrigerating machine oil were placed into a heat-resisting glass tube, the inside of the glass tube was deaerated by a vacuum pump, 2ml of refrigerant R1234yf was added, and the heat-resisting glass tube was sealed by a gas burner.
Experiment 2: Experiment 2 was performed under the same conditions as Experiment 1, except that the temperature of the constant-temperature oven was set to 150 degrees Celsius.

### [Analysis Conditions]

(A): An analysis of nylon I (unprocessed nylon 6) was carried out.
(B): After Experiment 1 was performed using nylon I as a resin material, an analysis of nylon I having been sealed in the glass tube was carried out.
(C): After Experiment 2 was performed using nylon I as a resin material, an analysis of nylon I having been sealed in the heat-resisting glass tube was carried out.
(D): An analysis of nylon II (stretched, processed nylon 6) was carried out.
(E): After Experiment 1 was performed using nylon II as a resin material, an analysis of nylon II having been sealed in the heat-resisting glass tube was carried out.
(F): After Experiment 2 was performed using nylon II as a resin material, an analysis of nylon II having been sealed in the glass tube was carried out.
(G): An analysis of polytetrafluoroethylene (PTFE) was carried out.
(H): After Experiment 2 was performed using PTFE as a resin material, an analysis of PTFE having been sealed in the glass tube was carried out.
(I): An analysis of polyimide was carried out.
(J): After Experiment 2 was performed using polyimide as a resin material, an analysis of polyimide having been sealed in the glass tube was carried out.

### [Analysis Items]

FT-IR (Fourier transform infrared spectroscopy) analysis: A molecular structure analysis of a compound included in a sample was carried out.
EDX (Energy dispersive X-ray) analysis: An qualitative analysis of elements included in a sample was carried out.
SEM (Scanning electron microscope) observation: A qualitative assessment of a surface of resin material was carried out.

### [Comparative Example 1]

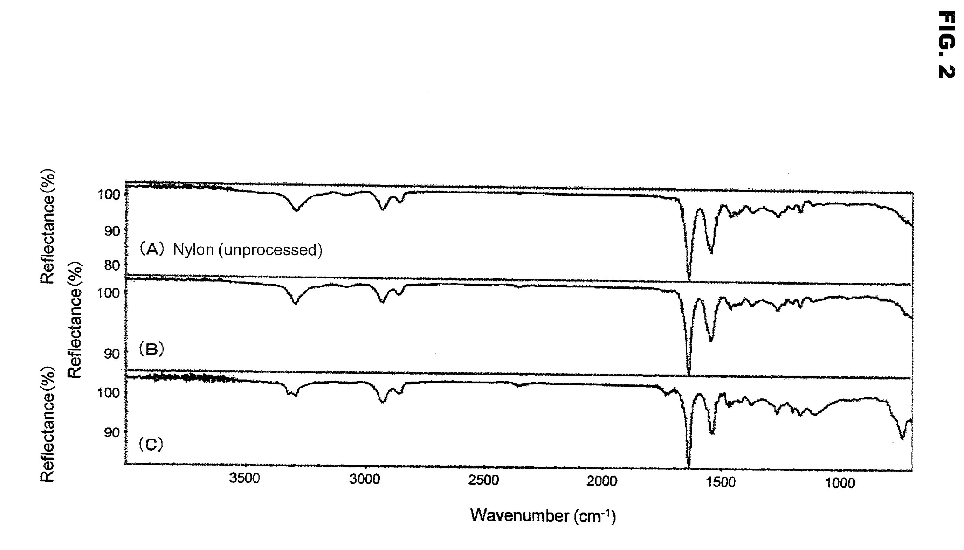

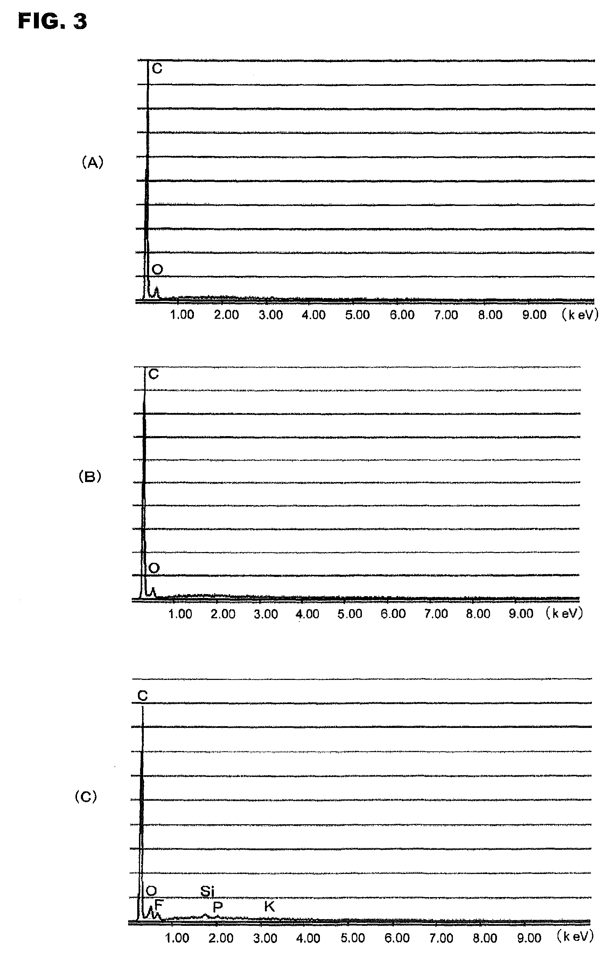

In order to investigate a case that nylon 6, which is a resin material in conventional technology, was used with new refrigerant R1234yf, FT-IR analysis, EDX analysis and SEM observation were conducted under the analysis conditions (A), (B) and (C) using nylon I (unprocessed nylon 6). Each of the analysis conditions (A), (B) and (C) represents a case where no experiments have been performed yet, a case where the Experiment 1 (Temperature: 120 degree Celsius) has been performed and a case where the Experiment 2 (Temperature: 150 degree Celsius) has been performed, respectively. These results of analyses are shown in Fig.2, Fig.3, and Table 1. Fig. 2 depicts a result of FT-IR analysis under the analysis conditions (A)-(C). In comparison among IR absorption spectra in Fig. 2, while almost the same spectra are shown under the analysis conditions (A) and the analysis conditions (B), several absorption such as absorption at 1730 cm⁻¹ derived from carbonyl groups indicating hydrolysis of nylon, absorption at 1100 cm⁻¹ derived from amide groups indicating existence of denatured nylon, and absorption at 730cm⁻¹ indicating a chemical reaction with fluorine compound are observed under the analysis conditions (C). These results indicate that nylon has been denatured by ingredients generated by decomposition of refrigerant R1234yf. Fig. 3 depicts a result of EDX analysis under the analysis conditions (A)-(C). As shown in this result, elements such as fluorine F, silicon Si, phosphorus P, and so forth were observed under the analysis conditions (C), while these elements were not observed under the analysis conditions (A) and (B). Namely, the result indicates that decomposition or denaturalization of nylon 6 is caused under the analysis conditions (C). Further, in the SEM observation, surface irregularity of resin material was observed and confirmed under the analysis conditions (C). The summary of these results are shown in (A)-(C) of Table 1. These experimental results show that, in a refrigeration circuit using the new refrigerant R1234yf, nylon, which was common as a material for forming members in the conventional technology, is chemically unstable and is not always suitable as a resin material for a refrigeration circuit. Specifically, under these conditions, it is probably supposed that highly active acid like hydrogen fluoride is generated by phenomena such as decomposition of refrigerant R1234yf and so forth, and denaturalization or decomposition of nylon is caused by ingredients generated by these phenomena.

### [Comparative Example 2]

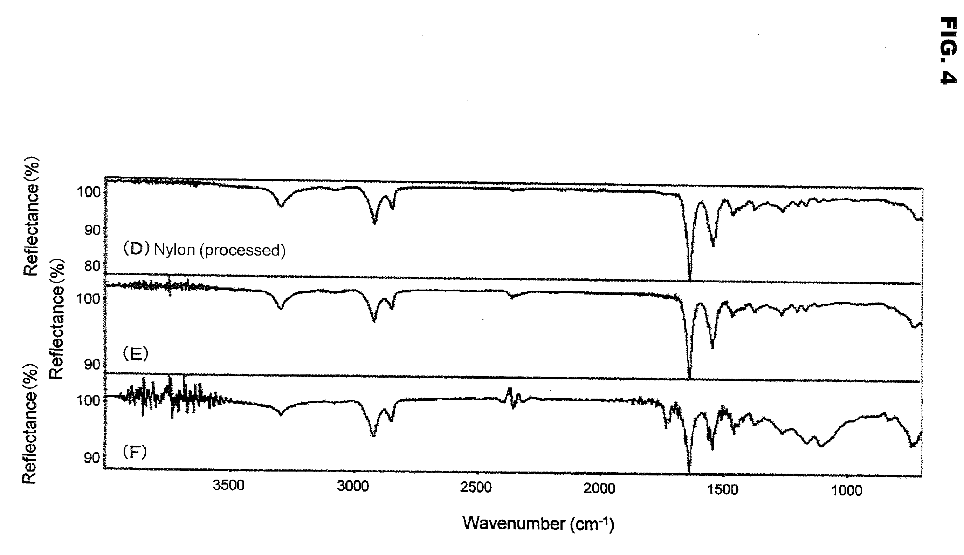

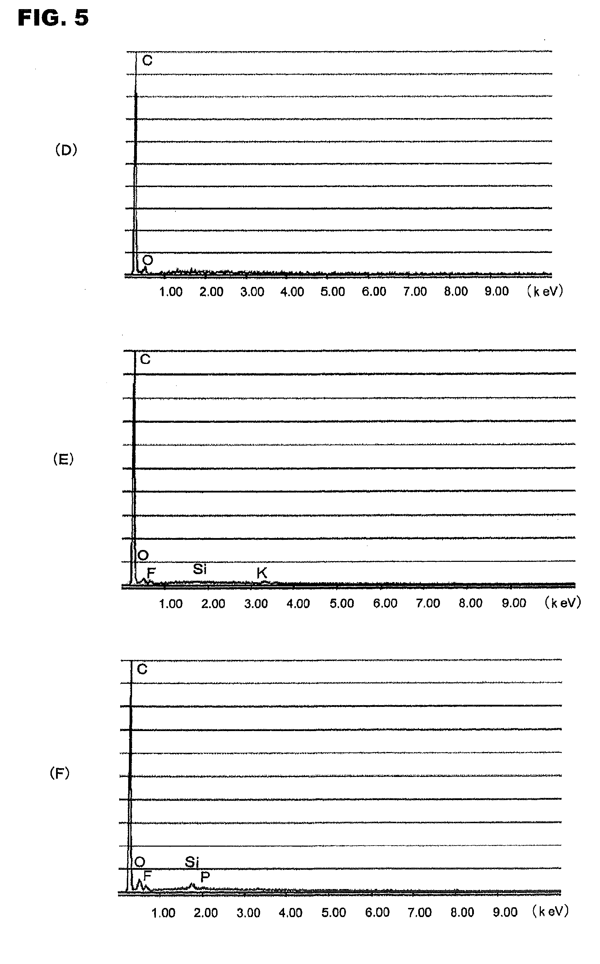

In order to confirm whether the result of Comparative Example 1 might be affected by a condition where resin material had been processed or not, FT-IR analysis, EDX analysis and SEM observation were conducted using nylon II (stretched, processed nylon 6) under the analysis conditions (D), (E) and (F), as is the case with Comparative Example 1. Each of the analysis conditions (D), (E) and (F) represent a case where no experiment has been performed yet, a case where the Experiment 1 (a temperature of 120 degree Celsius) has been performed and a case where the Experiment 2 (a temperature of 150 degree Celsius) has been performed, respectively. These results of analyses are shown in Fig.4, Fig.5, and Table 1. Fig. 4 depicts a result of FT-IR analysis under the analysis conditions (D)-(F). In comparison among IR absorption spectra in Fig. 4, several absorption, such as absorption at 1730 cm⁻¹ derived from carbonyl groups indicating hydrolysis of nylon, absorption at 1100 cm⁻¹ derived from amide groups indicating existence of denatured nylon, and absorption at 730cm⁻¹ indicating a chemical reaction with fluorine compound, are observed under the analysis conditions (F) at a temperature of 150 degree Celsius, as is the case with the analysis conditions (C) of Comparative Example 1. Such absorption indicates that nylon has been denatured by ingredients generated by decomposition of refrigerant R1234yf. Fig. 5 depicts a result of EDX analysis under the analysis conditions (D)-(F). As shown in this result, elements such as fluorine F, silicon Si, phosphorus P, and so forth were observed under the analysis conditions (F) at a temperature of 150 degree Celsius, as is the case with the analysis conditions (C) of Comparative Example 1. Namely, the result indicates that decomposition or denaturalization of nylon 6 is caused under the analysis conditions (F). Further, in the SEM observation, surface irregularity of resin material was also observed and confirmed under the analysis conditions (F). The summary of these results are shown in (A)-(C) of Table 1. As shown in these Experimental Examples, in a refrigeration circuit using new refrigerant R1234yf, nylon, which was common as material for forming members in the conventional technology, is chemically unstable and is not always suitable as resin material for a refrigeration circuit.

### [Practical Example 1]

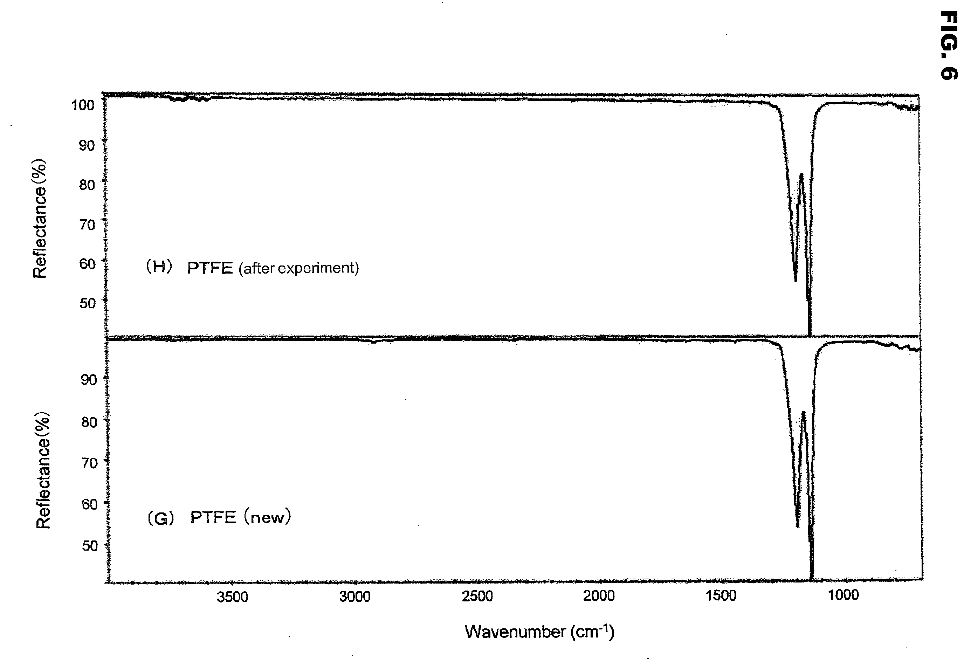

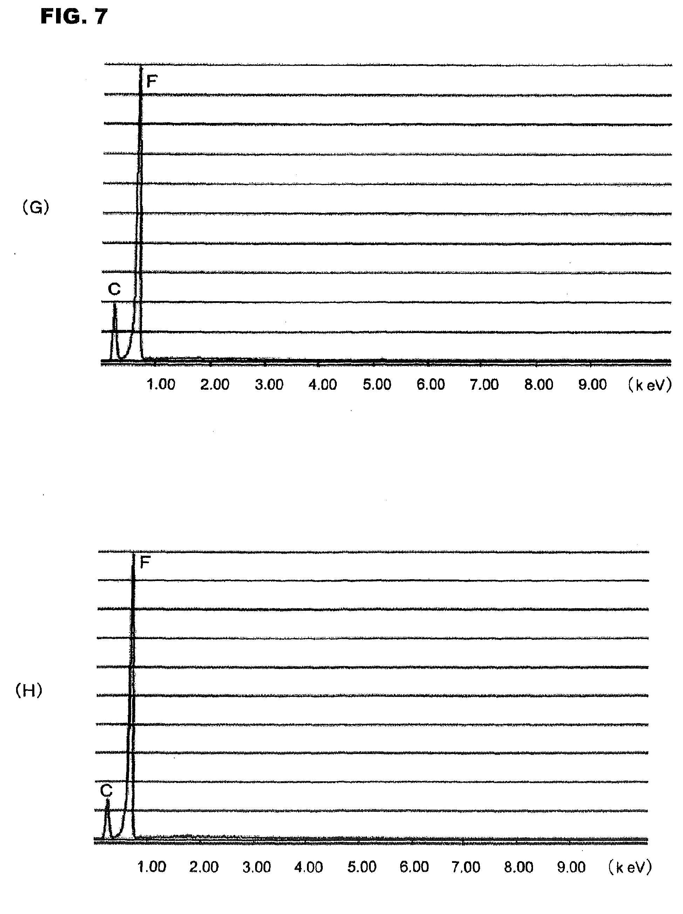

In order to investigate a case that PTFE as an example of resin material according to the present invention is used with new refrigerant R1234yf, FT-IR analysis, EDX analysis and SEM observation were conducted under the analysis conditions (G) and (H). The analysis conditions (G) represent a case where no experiments have been performed yet, and the analysis conditions (H) represent a case where the Experiment 2 (a temperature of 150 degree Celsius) has been performed. These results of analysis are shown in Fig.6, Fig.7, and Table 1. Fig. 6 depicts a result of FT-IR analysis under the analysis conditions (G) and (H). As shown in Fig. 6, very similar IR spectra are observed under the analysis conditions both (G) and (H), and unlike the analysis conditions (C) of the Comparative Example 1 and the analysis conditions (F) of the Comparative Example 2, no IR absorption indicating presence of ingredients generated by decomposition is observed. Fig. 7 depicts a result of EDX analysis under the analysis conditions (G) and (H). Although other elements were detected in the analysis conditions (C) of the Comparative Example 1 and the analysis conditions (F) of the Comparative Example 2, in this Practical Example, a detection result of elements under the analysis conditions (G) corresponds to a detection result of elements under the analysis conditions (H), and these results indicate that neither decomposition nor denaturalization of resin material was occurred even after the Experiment 2. Further, even in the SEM observation, surface irregularity of resin material was not observed under the analysis conditions (G) and (H). The summary of these results are shown in (G) and (H) of Table 1. As shown in these results, PTFE, which is an example of resin material in the present invention, is chemically stable in a refrigeration circuit using new refrigerant R1234yf and does not cause decomposition and denaturalization even at a relatively high temperature of 150 degree Celsius.

### [Practical Example 2]

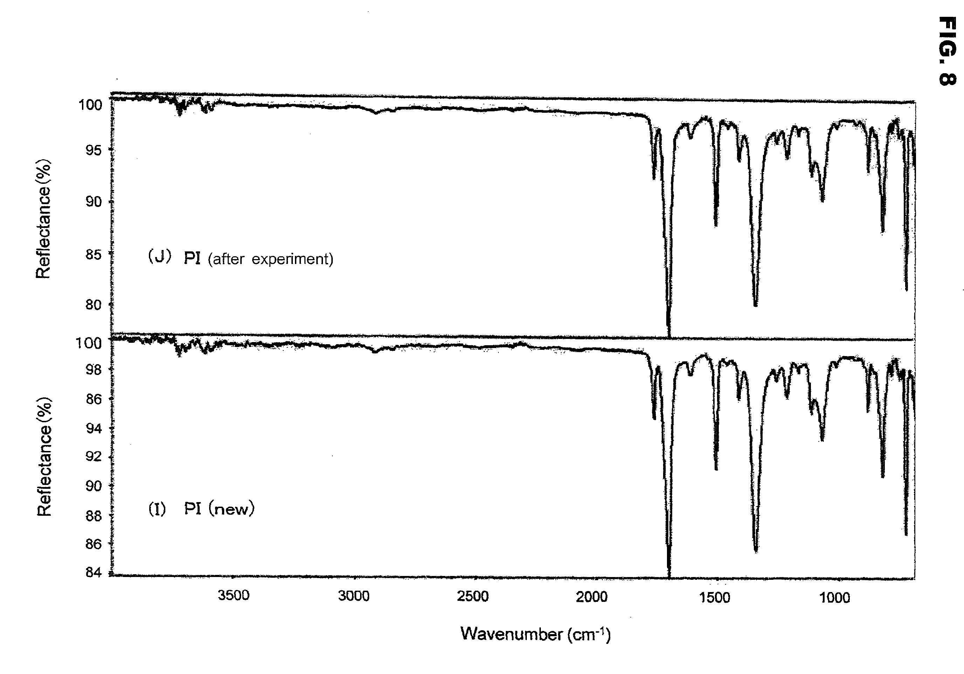

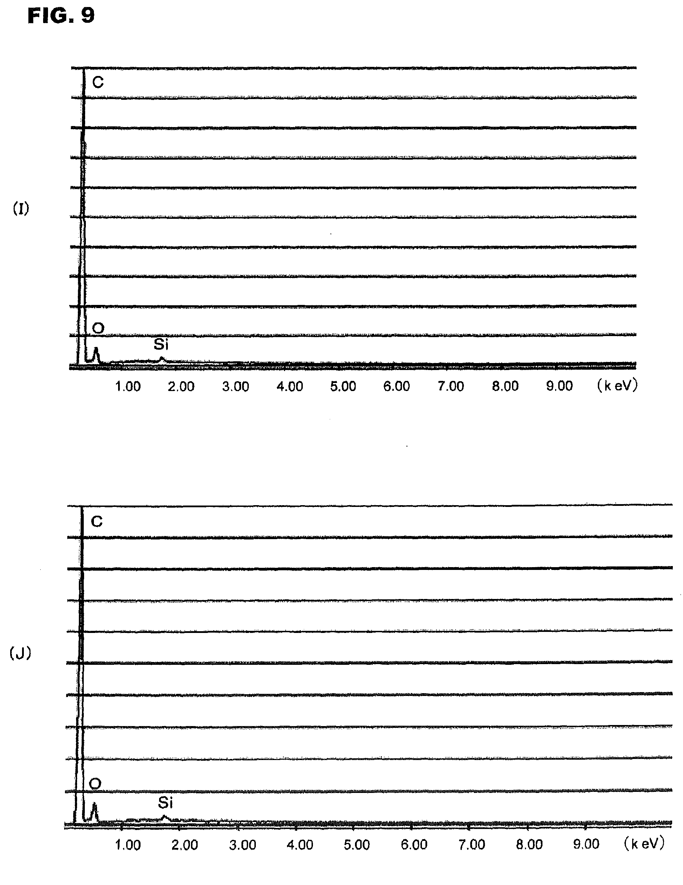

In order to investigate a case that polyimide as an example of resin material according to the present invention is used with new refrigerant R1234yf, FT-IR analysis, EDX analysis and SEM observation were conducted under the analysis conditions (I) and (J).
The analysis conditions (I) represent a case where no experiments have been performed, and the analysis conditions (J) represent a case where the Experiment 2 (a temperature of 150 degree Celsius) has been performed. These results of analyses are shown in Fig.8, Fig.9, and Table 1. Fig. 8 depicts a result of FT-IR analysis under the analysis conditions (I) and (J). As shown in Fig. 8, the IR spectrum under the analysis conditions (I) corresponds to the IR spectrum under the analysis conditions (J), and no IR spectrum indicating presence of ingredients generated by decomposition was observed. Fig. 9 depicts a result of EDX analysis under the analysis conditions (I) and (J). A detection result of elements under the analysis condition (G) corresponds to a detection result of elements under the analysis conditions (H), and as is the case with the Practical Example 1, these results indicate that neither decomposition nor denaturalization of resin material was occurred even after the Experiment 2. Further, even in the SEM observation, surface irregularity of resin material was not observed under the analysis conditions (I) and (J). The summary of these results are shown in (I) and (J) of Table 1. As shown in these results, polyimide, which is an example of resin material in the present invention, is chemically stable in a refrigeration circuit using new refrigerant R1234yf and does not cause decomposition and denaturalization even at a relatively high temperature of 150 degree Celsius.

**[Table 1]**

| Analysis Conditions | Experiment Conditions | | | | Results of Analysis | | |
|---|---|---|---|---|---|---|---|
| | Refrigerant | Lubricating oil | Temperature (°C) | Resin material | SEM Observation | Elements detected by EDM | Result of FT-IR Analysis |
| (A) | - | | | Nylon I | - | C, O | Absorption Spectrum of Nylon 6 |
| (B) | R1234yf | PAG | 120 | Nylon I | No irregurality | C, O | unchanged |
| (C) | R1234yf | PAG | 150 | Nylon I | Surface irregurality was found | C, O, F, C, O, F, Si, P, K | New Absorption at 3300, 1730, 1100 and 730 cm⁻¹ *1 |
| (D) | - | | | Nylon II | - | C, O C, O | Absorption Spectrum of Nylon 6 |
| (E) | R1234yf | PAG | 120 | Nylon II | Surface irregurality was found | C, O, F, Si, K | unchanged |
| (F) | R1234yf | PAG | 150 | Nylon II | Surface irregurality was found | C, O, F, Si, P | New Absorption at 1730, 1100 and 730 cm⁻¹ *1 |
| (G) | - | | | PTFE | - | C, F | Absorption Spectrum of PTFE |
| (H) | R1234yf | PAG | 150 | PTFE | No irregurality | C, F | unchanged |
| (I) | - | | | Polyimide | - | C, O, Si | Absorption Spectrum of Polyimide |
| (J) | R1234yf | PAG | 150 | Polyimide | No irregurality | C, O, Si | unchanged |

In the FT-IR spectrum analysis results of Table 1 mentioned above, Each of the wave numbers at positions marked by the symbol *1 has the following meaning.
3300cm⁻¹: An absorption spectrum derived from amide, showing denaturalization of nylon.
1730cm⁻¹: An absorption spectrum derived from carbonyl, showing hydrolysis of the nylon.
1100cm⁻¹: An absorption spectrum derived from amide, showing denaturalization of nylon.
730cm⁻¹: An absorption spectrum derived from C-F bond, showing denaturalization of nylon.

### Industrial Applications of the Invention

The refrigeration circuit according to the present invention is applicable to any refrigeration cycle using R1234yf as refrigerant, and is suitable for a case where refrigerating machine oil is used with R1234yf.

### Explanation of symbols

- 1:: refrigeration circuit
- 2:: compressor
- 3:: condenser
- 4:: expansion valve as decompression/expansion means
- 5:: evaporator

## Claims

1. A resin material disposed at a port coming into direct contact with refrigerant in a refrigeration circuit which comprises a compressor for compressing refrigerant, a condenser for condensing compressed refrigerant, a depressurizing/expanding means for depressurizing and expanding condensed refrigerant, and an evaporator for evaporating depressurized and expanded refrigerant, **characterized in that** when R1234yf is used as said refrigerant for said refrigeration circuit, said resin material has a chemical resistance at least to said refrigerant or ingredients generated by decomposition of said refrigerant.

2. The resin material for refrigeration circuit according to claim 1, wherein a refrigerating machine oil is circulated through said refrigeration circuit together with said refrigerant.

3. The resin material for refrigeration circuit according to claim 2, wherein said resin material has a thermal resistance to a temperature of a high-temperature fluid comprising a mixture of said refrigerant and said refrigerating machine oil in said refrigeration circuit.

4. The resin material for refrigeration circuit according to claim 2, wherein said resin material has a chemical resistance to ingredients generated by decomposition or denaturalization of said refrigerating machine oil.

5. The resin material for refrigeration circuit according to claim 1, wherein said resin material comprises at least one compound selected from the group consisting of polytetrafluoroethylene, a copolymer of tetrafluoroethylene and perfluoroalkyl vinyl ether, a copolymer of tetrafluoroethylene and hexafluoropropylene, a copolymer of tetrafluoroethylene and ethylene, polychlorotrifluoroethylene, a copolymer of chlorotrifluoroethylene and ethylene, polyvinylidene fluoride, polyvinyl fluoride, polyvinyl chloride, polyvinylidene chloride, polyethylene, ultra high-molecular weight polyethylene, isotactic polypropylene, syndiotactic polypropylene, poly-4-methylpentene-1, syndiotactic polystyrene, isotactic polystyrene, polyphenylene sulfide, polyimide, polyamideimide, polyetherimide, polybenzimidazole, polyetheretherketone, polyallylethernitrile, polyphenylene ether, modified polyphenylene ether, an epoxy resin, a phenolic resin, a fully aromatic-group polyamide resin, a semi-aromatic-group polyamide resin, polyester, polyketone and polyphenylsulfone.

6. The resin material for refrigeration circuit according to claim 5, wherein said resin material contains an aromatic polyamide which is either a fully aromatic-group polyamide resin or a semi-aromatic-group polyamide resin, and an amide bond ratio of said aromatic polyamide is less than 0.2.

7. The resin material for refrigeration circuit according to claim 1, wherein at least one selected from the group consisting of carbon fiber, glass fiber, talc, calcium carbonate, carbon black and graphite is compounded with said resin material.

8. The resin material for refrigeration circuit according to claim 2, wherein polyalkylene glycol is used as said refrigerating machine oil.

9. The resin material for refrigeration circuit according to claim 1, wherein said resin material is used as a material for forming an inner surface of a hose.

10. The resin material for refrigeration circuit according to claim 1, wherein said resin material is used as a material for forming an inner surface of said compressor.

11. The resin material for refrigeration circuit according to claim 1, wherein said resin material is used as a surface forming material for a member having a sliding surface provided in said compressor.

12. The resin material for refrigeration circuit according to claim 1, wherein said resin material is used as a material for forming a filter provided in said compressor.

13. The resin material for refrigeration circuit according to claim 1, wherein said refrigeration circuit is a refrigeration circuit for an air conditioning system for vehicles.
